# EUROPÄISCHE PATENTSCHRIFT

(11) **EP 2 600 045 B1**
(45) Veröffentlichungstag und Bekanntmachung des Hinweises auf die Patenterteilung: **14.09.2016**
(21) Anmeldenummer: 11191625.0
(22) Anmeldetag: 01.12.2011
(51) Int. Cl.: F16K 27/02, F16K 31/06

(54) **Elektromagnetisch betätigbares Ventil**
Electromagnetically actuated valve
Soupape actionnée de manière électromagnétique

(43) Veröffentlichungstag der Anmeldung: 05.06.2013
(73) Patentinhaber: SVM Schultz Verwaltungs-GmbH & Co. KG, 87700 Memmingen (DE)
(72) Erfinder: Weiss, Johann, 88239 Wangen (DE)
(74) Vertreter: Pfister, Stefan Helmut Ulrich

(56) Entgegenhaltungen:
- EP-A2- 1 519 256
- DE-A1- 3 925 794
- DE-A1- 10 310 788
- DE-A1- 19 504 185
- US-A- 4 951 703
- US-A- 5 829 122
- US-A1- 2004 084 649
- US-A1- 2008 216 899

## Beschreibung

Die Erfindung betrifft ein elektromagnetisch betätigbares Ventil, welches aus einem Elektromagneten und einem Ventilkörper besteht, wobei eine Hülse vorgesehen ist, welche zumindest den Elektromagneten aufnimmt.

Gattungsgemäße elektromagnetisch betätigbare Ventile, oftmals auch als Magnetventil bezeichnet, sind im Stand der Technik hinlänglich bekannt. Sie dienen zur Steuerung eines Medienflusses, zum Beispiel als Hydraulik- oder Pneumatikventil. Es sind hierzu die unterschiedlichsten Bauformen bekannt, zum Beispiel 2/2-Wegeventile oder 3/2-Wegeventile, die sowohl als Schaltventile, wie auch als Proportionalventile realisiert sind.

Gattungsgemäße Ventile bestehen aus zwei Bauteilhauptgruppen, zum einen dem Elektromagneten und zum anderen dem Ventilkörper. Dem Elektromagneten fällt hierbei die Aufgabe zu, eine mechanische Bewegung zu erzeugen, die über den Anker in den Ventilkörper übertragen wird. Im Ventilkörper befindet sich die das Medium führende Düse, die durch den beweglichen Dichtkörper entsprechend der relativen Lage des Ankers geöffnet oder verschlossen wird. Des weiteren sind an dem Ventilkörper Anschlüsse zum Verbraucher, von dem Vorratsgefäß und gegebenenfalls auch zu einem Rücklauf usw. vorgesehen.

Der typische Aufbau eines Elektromagneten besteht aus einer Spule, die aus einem Spulenkörper besteht und Wicklungen von Draht trägt, die bei Strombeaufschlagung ein Magnetfeld erzeugt, das auf den aus magnetisierbarem Material bestehenden Anker wirkt. Aufgrund der Beaufschlagung mit elektrischem Strom und dem daraus resultierenden Magnetfeld erfährt der Anker eine Bewegung, zum Beispiel entgegen die Kraft einer oder mehrerer Rückstellfedern, die bewirken, dass im abgeschalteten Zustand der Anker wieder in seine Ausgangslage zurückfällt. Die Anordnung einer Rückstellfeder ist dabei nicht zwingend gemäß der Erfindung vorgesehen, die Rückstellbewegung kann zum Beispiel auch durch eine entsprechende Umpolung oder Anordnung einer zweiten Spule mit entgegengesetztem Magnetfeld gleichwohl realisiert werden.

Die Anordnung des Ankers im Elektromagneten ist dabei auch variabel, es gibt hierzu mehrere alternative Ausgestaltungen. So ist es bekannt, und diese Varianten werden von der Erfindung auch umfasst, dass der Anker zum Beispiel zumindest teilweise in einen Ankerraum eintaucht, wobei der Ankerraum zumindest teilweise von dem Spulenkörper beziehungsweise der Spule umgeben ist. Es sind aber auch Varianten bekannt, bei welchen sich der Anker vor der Spule (bezogen auf die axiale Richtung der Spule) befindet und das Innere der Spule vollständig mit einem die Magnetfeldlinien führenden Kern ausgefüllt ist.

Bei der Variante mit einem Ankerraum ist oftmals ebenfalls ein Kern vorgesehen, der zumindest teilweise in das Innere der Spule beziehungsweise des Spulenkörpers einsteht und somit rückseitig den Ankerraum begrenzt. Zwischen der dem Anker zugewandten Grenzfläche des Kernes und dem Anker bildet sich ein Luftspalt aus, der bei Strombeaufschlagung durch die Bewegung des Ankers verschlossen wird.

Diese elektromagnetisch empfindlichen Teile gattungsgemäßer Magnetventile werden in einem Gehäuse, zum Beispiel einer Hülse, eingebaut.

Im Stand der Technik ist es bekannt, die Hülsen in einem verhältnismäßig aufwändigen, zerspanenden Bearbeitungsschritt herzustellen. Hierdurch ist es möglich, im Inneren der Hülse entsprechende Vorkehrungen für die optimale Lagerung und Positionierung der Teile des Elektromagneten einerseits wie auch des Ventilkörpers andererseits zu schaffen. Die Montage erfolgt dabei beidseitig, das heißt, durch beide Hülsenenden werden Bauteile ins Hülseninnere eingebaut. Dabei dient diese Hülse auch gleichzeitig als (einstückiges) Ventilgehäuse.

In US 2008/0216899A1 wird vorgeschlagen, die Hülsen im Spritzgussverfahren aus Kunststoff herzustellen. Dies hat den Vorteil, dass einige Bauteile des Ventils bei der Herstellung der Hülse mit Kunststoff umspritzt werden können. Nachteilig ist die geringe Festigkeit der so erzeugten Gehäuse sowie die Komplexität des Umspritzprozesses.

Ausgehend von diesem Stand der Technik ist es Aufgabe der vorliegenden Erfindung, gattungsgemäße elektromagnetisch betätigbare Ventile so zu verbessern, dass diese günstiger herstellbar sind.

Zur Lösung dieser Aufgabe geht die Erfindung aus von einem elektromagnetisch betätigbaren Ventil, wie eingangs beschrieben, und schlägt vor, dass die Hülse als tiefgezogenes Bauteil ausgebildet ist, wobei die Hülse als tiefgezogenes Bauteil ausgebildet ist und der Ventilkörper aus einem in die Hülse eingeführten, an der Halterung anliegenden oberen Ventilkörperteil und einem von Außen mit dem oberen Ventilkörperteil verbindbaren, unteren Ventilkörperteil gebildet ist, die Hülse an einem Ende eine in die Öffnung der Hülse hineinragende Halterung aufweist und dass das der Halterung gegenüberliegende Hülsenende durch eine den Kern des Elektromagneten haltende Jochscheibe verschlossen ist und der Kern in einem Presssitz der Jochscheibe gehalten ist und für Justagezwecke relativ zur Jochscheibe in dem Presssitz positionierbar ist. Durch diesen zerspanungsfreien Umformprozess werden die Herstellungskosten für die Hülse erheblich gesenkt. Gleichzeitig ist es möglich, eine tiefgezogene Hülse so exakt herzustellen, dass eine ausreichend exakte Lagerung der einzelnen Baugruppen des Magnetventiles möglich ist.

Bevorzugterweise ist die Hülse aus einem Metall gefertigt, welches ausreichend Verformungseigenschaften für einen Tiefziehprozess aufweist. Insbesondere ist auch vorgesehen, eine Legierung oder ein Metall beziehungsweise ein Material zu wählen, das eine ausreichende magnetflusslinienführende Eigenschaft aufweist.

Die Hülse weist an einem Ende eine in die Öffnung der Hülse hineinragende Halterung auf. Geschickterweise wird dabei diese Halterung auch bei dem Tiefziehprozess, bei der Herstellung der Hülse, realisiert. Die Ausgestaltung der Halterung selber ist sehr variabel, diese kann zumindest ein Haltestück, ein Haltekragen, ein Haltebügel oder ein Haltering sein. Üblicherweise ist die Hülse im Querschnitt gesehen kreisrund. Die Halterung hat die Aufgabe, in die Hülse eingelegte Bauteile in der Hülse zu halten, wenn diese zum Beispiel in einer stehenden Lage montiert wird. Insofern reicht bereits ein verhältnismäßig kurzes Haltestück von wenigen Millimetern Länge in Umfangsrichtung und/oder radialer Richtung beziehungsweis einem geringen Winkelanteil aus, um die Halterung zu bilden. Es ist gleichwohl aber auch möglich, einen größer gefassten Haltekragen, ein oder auch mehrere vorbeschriebene Haltestücke, einen Haltebügel oder auch einen die gesamte Öffnung der Hülse einfassenden Haltering vorzusehen. Die Ausgestaltung der Halterung ist dabei so geschickt gewählt, dass diese am Ende der Hülse angeordnet ist. Dabei dient die Halterung als Auflage, Begrenzung oder Anschlag für die verschiedenen Einbauteile des Ventils. Die Halterung vermeidet, dass bereits eingesteckte
Bauteile wieder aus der Hülse herausrutschen und verloren gehen. Geschickterweise befindet sich diese Halterung an einem Ende der Hülse, wodurch sich ergibt, dass das gesamte Hülseninnere durch die andere Hülsenöffnung für Montagezwecke zugänglich ist. Hieraus ergibt sich eine bevorzugte Montageposition, nämlich derart, dass die Hülse aufrecht steht und die Halterung in der aufrechten Position unten ist. Die endseitige Anordnung der Halterung erlaubt eine optimale Ausnutzung des Hülsenraumes in dieser Montageposition.

Bevorzugterweise ist vorgesehen, dass die Halterung zur Positionierung des Ventilkörpers beziehungsweise von Teilen des Ventilkörpers an der Hülse dient und der Ventilkörper zumindest teilweise aus der Hülse heraussteht. Im Gegensatz zu den Lösungen im Stand der Technik bildet die Hülse nach diesem Vorschlag nicht ein vollständiges Ventilgehäuse, sondern es ist vorgesehen, dass der Ventilkörper über die Hülse nach unten vorsteht, der Ventilkörper selber also ausreichend dicht ist, wodurch Material der Hülse eingespart werden kann, was ebenenfalls Materialkosten reduziert.

Der Ventilkörper ist aus einem in die Hülse eingeführten, an der Halterung anliegenden oberen Ventilkörperteil und einem von außen (außerhalb der Hülse, das heißt von außen an die Hülse herangeführten) mit dem oberen Ventilkörperteil verbindbaren unteren Ventilkörperteil gebildet. Diese grundsätzlich mehrteilige, insbesondere zweiteilige Ausgestaltung des Ventilkörpers hat den Vorteil, dass der Ventilkörper in geschickter Weise auf die Halterung montierbar ist. Das erste, obere Ventilkörperteil wird dabei von der der Halterung gegenüberliegenden, noch offenen Seite der Hülse in diese eingeführt und von dort an die gegenüberliegende Hülsenseite herangeschoben, bis dieses an der Halterung anliegt. Das untere Ventilkörperteil wird dann zum Beispiel bevorzugt auf das obere Ventilkörperteil aufgesteckt und umschließt dabei gegebenenfalls (wobei dies dabei an der Halterung anliegen kann oder nicht) von der Außenseite her (bezogen auf die Hülse), die Halterung. Dabei ist die Ausgestaltung des oberen Ventilkörperteils beziehungsweise unteren Ventilkörperteils sehr variabel. Zunächst ist es möglich, dass das obere Ventilkörperteil nicht über das Ende der Hülse (also der Halterung) aus der Hülse hervorsteht. In geeigneter Weise ist aber ein Bund- oder Klemmsitz vorgesehen, um das untere Ventilkörperteil mit dem oberen Ventilkörperteil zu verbinden. Alternativ ist es natürlich auch möglich, dass das obere Teil eine Verjüngung aufweist, mit welcher dieses an der Halterung vorbei nach außen, aus der Hülse hervorsteht, auf welchem dann, innen eingreifend oder außen übergreifend, das untere Ventilkörperteil aufgesetzt wird.

Die Verbindung zwischen dem oberen und dem unteren Ventilkörperteil ist dabei so, dass diese beiden Elemente zusammengesteckt, aber grundsätzlich wieder lösbar, insbesondere relativ zueinander justierbar beziehungsweise positionierbar sind. Eine solche Anordnung ist insbesondere für Justagezwecke, was noch weiter ausgeführt werden wird, von Vorteil.

Des Weiteren sieht eine Variante des Vorschlages vor, dass der obere Ventilkörperteil und der untere Ventilkörperteil durch eine Verbindungsschicht lagestabil und dicht verbindbar sind. Ist insbesondere die Relativposition von oberem Ventilkörperteil und unterem Ventilkörperteil zum Beispiel durch ein Justierprozess gefunden, werden die beiden Ventilkörperteile durch eine Verbindungsschicht miteinander lagestabil, das heißt dauerhaft positionsgenau und dicht verbunden. Durch die dichte Ausgestaltung der Verbindungsschicht wird erreicht, dass der gesamte Ventilkörper selber dicht ist und ein separates Ventilgehäuse entfällt. Die Ausgestaltung der Verbindungsschicht ist ausgesprochen variabel, sie ist zum Beispiel als Klebeschicht, Lötschicht, Schweißschicht usw. ausbildbar; dies ist zum Beispiel einstoffig möglich, mit dem Material des Ventilkörpers beziehungsweise der Ventilkörperteile, oder aus einem hierzu unterschiedlichen Material, zum Beispiel einer Klebeschicht.

Bevorzugterweise ist der Ventilkörper beziehungsweise die beiden Ventilkörperteile aus einem Kunststoff gefertigt. Geschickterweise sind die beiden Ventilkörperteile zum Beispiel als Spritzgussteile kostengünstig in großer Anzahl herstellbar. Es ist aber auch möglich, die Ventilkörperteile aus Metall herzustellen, sie werden zum Beispiel ebenfalls kostengünstig in einem kombinierten Tiefzieh- beziehungsweise Stanzprozess gewonnen. Gleichwirkend zu einer Verbindungsschicht ist auch ein Verbindungsmittel nach einer vorteilhaften Ausgestaltung vorgesehen. Ein Verbindungsmittel ist dabei zum Beispiel ein separates Bauteil, zum Beispiel ein Verbindungsring, der in geeigneter Weise über die beiden Ventilkörperteile aufgesetzt wird und diese lagestabil und dicht miteinander verbindet. Zwar ist eine solche Variante etwas aufwändiger, aber gleichwohl von der Erfindung umfasst.

Die zweiteilige Ausgestaltung des Ventilkörpers hat auch den Vorteil, dass zwischen den beiden Ventilkörperteilen ein weiteres Bauteil des Ventilkörpers einbaubar ist. So ist zum Beispiel vorgesehen, dass der Dichtkörper zwischen die beiden Ventilkörperteile einsetzbar ist und so auch auf den Anker montierbar ist, der den oberen Ventilkörperteil an geeigneter Stelle durchdringt und so in den Ventilkörper hereinragt.

In einer bevorzugten Ausgestaltung des Vorschlages ist vorgesehen, dass die Hülse innenseitig eine Verjüngung aufweist. Geschickterweise ist dabei die Verjüngung (sie bewirkt eine Verjüngung des Innendurchmessers beziehungsweise Innenquerschnittsfläche) auf der der Halterung zugewandten Hülsenseite vorgesehen. Die Erfindung ist aber hierauf nicht beschränkt. Der Vorteil dieser Verjüngung ist, dass die Bauteile, die im unteren, der Halterung zugewandten Bereich der Hülse einzubauen sind, auf dem hier kleineren Innendurchmesser auf Passung gefertigt sind und somit einen Einführspalt zwischen dem Außendurchmesser dieser Bauteile und dem Innendurchmesser der Hülse an dem der Halterung gegenüberliegenden Ende besteht, durch welche das Einfädeln oder Einführen dieser Bauteile in die Hülse erheblich erleichtert wird. Somit ist auch grundsätzlich eine automatische Fertigung einfach realisierbar.

Die Verjüngung ist dabei bei dem Tiefziehprozess in einfacher Weise einarbeitbar, geschickterweise erstreckt sich die Verjüngung bis zu dem mit der Halterung ausgestatteten Hülsenende.

Die Verjüngung hat noch einen weiteren Vorteil. In die Hülse werden verschiedene Bauteile eingebaut, die insbesondere eine oder mehrere O-Ring-Dichtungen tragen, um den Ventilkörper bzw. das gesamte erfindungsgemäße Ventil, welches Teil eines Medium leitenden Systems ist, abzudichten. Diese Dichtungen bzw. O-Ring-Dichtungen sind entsprechend sensibel und die Verjüngung erreicht, dass die Hülse im oberen Einführbereich entsprechend breiter ist und dieser Maßüberstand so groß gewählt ist, dass die auf die einzelnen Bauteile aufgesteckten Dichtungen beim Einführen im oberen Bereich nicht an der Hülseninnenwand anliegen und bei der Einführbewegung beschädigt werden.

Im Bereich der Verjüngung wird der Durchmesser der Hülse so weit reduziert, dass tatsächlich ein dichter Sitz der Dichtung, wie gewünscht, erreicht wird. Die Verjüngung kombiniert daher eine Mehrzahl von unterschiedlichen Vorteilen.

Wie bereits ausgeführt, befindet sich am fertigen Ventil im Bereich der Halterung zumindest ein Teil des Ventilkörpers, an dem sich dann in Richtung des Hülseninneren, von der Halterung abgewandt, Bauteile des Elektromagneten, insbesondere die Spule samt Spulenkörper und Drahtwicklung anschließen. Die Anordnung ist dabei so gewählt, dass ein Einführspalt zwischen dem Außendurchmesser des Spulenkörpers des Elektromagneten und dem Innendurchmesser der Hülse vorgesehen ist. Dieses Merkmal ist dabei so zu verstehen, dass es sich hierbei um den Bereich des Spulenkörpers handelt, der die Wicklungen trägt. In einem Ausführungsbeispiel ist zum Beispiel vorgesehen, dass der Spulenkörper an seinem der Halterung abgewandten Ende einen oberen Spulenkörperflansch aufweist, der zur Erleichterung des Verbundes des Spulenkörpers mit der Hülse einen entsprechen größeren Durchmesser aufweist. Da in diesem Bereich der Spulenkörper jedoch bereits eingeführt ist und hierdurch eine entsprechende zusätzliche Justage und Zentrierung erfolgt, ist dies nicht im Widerspruch zu der Anordnung eines entsprechenden Einführspaltes, der sich gleichwohl über eine wesentliche Höhe des Spulenkörpers und insbesondere im unteren Bereich erstreckt. Dies führt ebenfalls zu einer entsprechenden Einbauerleichterung des Spulenkörpers, wobei der untere, in Richtung der Halterung zugewandte Rand des Spulenkörpers zum Beispiel dann auf der innenseitigen Verjüngung in der Hülse aufliegt und so den Spulenkörper in der Hülse zentriert beziehungsweise positioniert. Die Breite des Einführspaltes beträgt dabei zum Beispiel 0,1 bis 0,5 mm bei einem beispielhaften Hülseninnendurchmesser von ca. 6 bis 7 mm. Relativ, bezogen auf den Innenradius der Hülse an dem der Halterung abgewandten Hülsenseite beträgt die Breite des Einführspalts ca. 3 bis 15 %, bevorzugt ca. 4 bis 10 %, insbesondere 6 ± 2 % des Hülseninnenradius. Dabei umgibt der Einführspalt den Spulenkörper ringartig.

Das der Halterung gegenüberliegende Hülsenende ist eine den Kern des Elektromagneten haltende Jochscheibe verschlossen und der Kern ist in einem Presssitz der Jochscheibe gehalten und ist für Justagezwecke relativ zur Jochscheibe in dem Presssitz positionierbar. Dabei wird der Kern rückseitig in den Spulenkörper eingeführt und positioniert somit den Spulenkörper an dieser Seite. Die Jochscheibe ist durch einen Presssitz mit dem Kern verbunden, der Presssitz erlaubt eine gewisse Justagebewegung zwischen Jochscheibe und Kern. Die Jochscheibe wird auf dem der Halterung gegenüberliegenden Hülsenende aufgesetzt und mit diesem verbunden, zum Beispiel mechanisch verstemmt, Verbördelt, verschweißt oder verklebt. Es kommt bei diesem Verbund nicht zwingend auf eine Dichtheit an, diese wird zum Beispiel durch separate in die Hülse eingelegte Dichtungen erreicht. In einer weiteren Variante ist aber auch hier eine dichte Verbindung problemlos zu realisieren. Vorzugsweise ist dabei die Jochscheibe aus dem gleichen Material gefertigt wie die Hülse, zum Beispiel aus Metall, Weicheisen oder ähnlichen, Magnetfeldlinien gut leitenden Materialien.

Die eingangs gestellte Aufgabe wird nicht nur durch das erfindungsgemäß vorgeschlagene Ventil gelöst, die Erfindung umfasst auch ein Verfahren zur Herstellung eines durch einen Elektromagneten bewegbaren Ventiles, welches bevorzugt so ausgebildet ist wie vorbeschrieben, die Erfindung hierauf aber nicht beschränkt. Dabei ist in diesem Verfahren durch die Abfolge folgender Schritte gekennzeichnet:
1. Zunächst wird der obere Ventilkörperteil in eine tief gezogene Hülse, die an ihrem einen Ende eine in die Öffnung der Hülse hineinragende Halterung besitzt, eingeführt.
   Da das obere Ventilkörperteil von der der Halterung gegenüberliegenden Hülsenseite in diese eingeführt wird, durch diese hindurchgleitet und dann auf der Halterung im unteren Bereich der Hülse, wo die Verjüngung im Innendurchmesser der Hülse vorgesehen ist, zu liegen kommt bildet sich ein entsprechender Einführspalt auch bei dem oberen Ventilkörperteil relativ zum Innendurchmesser der Hülse aus. Dieser Einführspalt, der gleich oder unterschiedlich zu dem Einführspalt zwischen dem Außendurchmesser des Spulenkörpers und dem Innendurchmesser der Hülse sein kann, erleichtert erheblich die Montage, also die Herstellung des (Magnet-)Ventiles und senkt daher die Herstellungskosten.
   Durch die Anordnung der Halterung auf der der Einführseite abgewandten Hülsenseite (im Montageposition normalerweise auf der unteren Seite) wird geschickterweise erreicht, dass sämtliche Bauteile, die in der Hülse einzubauen sind, von einer Seite in die Hülse eingebaut werden. Dabei ist es auch möglich, die Hülse bei dem Herstellungsprozess anzuheben und umzusetzen, bereits eingebaute Bauteile können durch die bestehende Halterung nicht aus der Hülse herausfallen!
2. Im darauffolgenden Schritt wird der Anker in das obere Ventilkörperteil eingesetzt.
   Dabei besitzt das obere Ventilkörperteil eine entsprechende Ausnehmung oder Führung für die Aufnahme des Ankers, wodurch der Anker durch das obere Ventilkörperteil hindurch ragt und mit dem noch aufzumontierenden Dichtkörper zusammenwirken kann. Geschickterweise ist an dem Anker bereits eine Rückstellfeder integriert angebaut, so dass in einem Montageschritt dieses zusätzliche Bauteil in die Hülse eingebaut werden kann.Es ist klar, dass der Anker für das Einsetzen des Ankers in das obere Ventilkörperteil auch in die Hülse einzuführen oder einzusetzen ist.
3. Als nächstes folgt dann das Einführen der Spule in die Hülsenseite aus der Hülse herausgeführt werden oder an einen entsprechenden Stecker angeschlossen werden.
4. Es erfolgt dann ein Verschließen des der Halterung gegen überliegenden Hülsenendes mit einer Jochscheibe.
   Geschickterweise ist dabei die Jochscheibe nicht mit dem Kern starr verbunden, die Anordnung des Kernes in einem Presssitz der Jochscheibe ist eine vorteilhafte Variante. Es ist zum Beispiel möglich, an den Spulenkörper vorgefertigt bereits den Kern anzuschließen, der auf andere Weise mit der Hülse beziehungsweise der Jochscheibe zusammenwirkt. Die Jochscheibe besitzt dabei entsprechende Ausnehmungen, um die Anschlußleitungen der Spule durchzulassen. Gegebenenfalls ist in diesem Bereich auch eine entsprechende Abdichtung vorgesehen.

Ein wesentlicher Vorzug der Erfindung liegt darin, dass alle Einbauten in die Hülse von einer Seite, nämlich von bezüglich der Halterung abliegenden Hülsenseite erfolgt. Es ist daher nicht notwendig, das teilmontierte Ventil in seiner Lage zu ändern, also zum Beispiel um eine horizontale Achse zu drehen. Diese Ausgestaltung senkt die Herstellungskosten erheblich, da die Montage von einer Richtung her günstiger zu bewirken ist.

Auch das Aufsetzen des unteren Ventilkörperteiles auf das in der Hülse eingeführte obere Ventilkörperteil ist einfach möglich. So ist zum Beispiel die relative Positionierung des unteren Ventilkörperteiles zur Hülse zu einem frühen Montagezeitpunkt möglich. So wird zum Beispiel die Hülse auf einen Werkstückträger aufgesetzt, an dem unterhalb bereits das untere Ventilkörperteil vorpositioniert ist. Das mit in die Hülse eingeführte obere Ventilkörperteil wird dann in einer Steckverbindung oder Klemmverbindung (die lösbar beziehungsweise relativ zueinander positionierbar bleibt) mit dem unteren Ventilkörperteil verbunden. Es ist somit sogar möglich, dass das untere, auf der Außenseite des Gehäuses vorgesehene Ventilkörperteil sogar noch vor anderen Bauteilen des Ventils an die Hülse herangeführt wird.

Natürlich ist es möglich, das untere Ventilkörperteil auch zu einem späteren Zeitpunkt, wenn also das obere Ventilkörperteil eingebaut ist, anzubauen, zum Beispiel nach dem dieses in die Hülse eingelegt ist, oder nachdem der Anker eingeführt wurde, oder aber der Spulenkörper eingelegt wurde.

Geschickterweise ist der Dichtkörper, der auf den Anker aufzustecken ist, mit einem Federelement verbunden und in das untere Ventilkörperteil vormontiert vorbereitet. So ist es möglich, dass, bevor die beiden Ventilkörperteile miteinander verbunden werden, der die Düse des Ventiles je nach Ankerstellung freigebende oder verschließende Dichtkörper mit dem vorderen Ende des Ankers verbunden wird.

Alternativ ist es möglich, dass gleichzeitig mit der Verbindung der beiden Ventilkörperteile der die Düse des Ventiles je nach Ankerstellung freigebende oder verschließende Dichtkörper mit dem vorderen Ende des Ankers verbunden wird. Die Anordnung ist dabei so gewählt, dass zunächst die beiden Ventilkörperteile aufgesteckt werden, also durch Klemmung halten, aber die Relativlage noch veränderbar ist, was insbesondere bei einem nachfolgenden Justageschritt von Vorteil ist.

In einer bevorzugten Ausgestaltung des Vorschlages ist vorgesehen, dass an dem länglichen Anker eine Flachformfeder, insbesondere eine Mäanderfeder als Anker-Rückstellfeder vorgesehen ist. Diese Flachformfeder besitzt einen deutlich größeren Durchmesser als der Anker, insbesondere liegt diese Feder an der Innenwandung der Verjüngung in der Hülse an. Für eine axiale Fixierung der Feder und damit auch eine axiale Fixierung beziehungsweise Führung des Ankers ist eine separate Befestigungsscheibe vorgesehen, die zum Beispiel vor dem Einbau des Spulenkörpers auf die Ankerfeder aufgelegt wird. Diese Haltefunktion kann aber auch durch eine entsprechende Ausgestaltung des Spulenkörpers erreicht werden, insofern ist hier die Ausgestaltung der Erfindung sehr variabel. Die Befestigungsscheibe hat dabei nicht nur die Aufgabe, die Rückstellfeder und somit den Anker zu fixieren, sie hat auch als Bauteil des magnetischen Kreises eine das Magnetfeld leitende Aufgabe. Hierzu ist zum Beispiel die Befestigungsscheibe aus einem magnetisierbaren Material geschaffen oder ist als radial gepolter Permanentmagnet ausgebildet, um zum Beispiel auch eine entsprechende Haltefunktion des Ankers einnehmen zu können. Neben einer diskreten Ausgestaltung der Befestigungsscheibe als separates, gegebenenfalls auch magnetisch wirksamem Bauteil, ist es gemäß der Erfindung auch vorgesehen, dass die Befestigungsscheibe am unteren Rand des Spulenkörpers vormontiert vorbereitet wird, was bei der Montage den separaten Einbauschritt für die Befestigungsscheibe einspart. Dabei ist es zum Beispiel möglich, die Befestigungsscheibe mit dem Spulenkörper mechanisch wirksam zu verbinden, zum Beispiel zu verstemmen oder anzuspritzen, zu verkleben oder einzuclipsen.

Es ist ein Vorzug des vorgeschlagenen Herstellungsverfahrens, dass, nachdem eine Positionsjustage des unteren Ventilkörperteiles zum oberen Ventilkörperteil erfolgt ist, die beiden Ventilkörperteile durch eine Verbindungsschicht zueinander lagestabil und dicht festgelegt werden. Günstigerweise werden dabei das untere und obere Ventilkörperteil miteinander verschweißt, zum Beispiel laserverschweißt. Die sich ausbildende Schweißschicht ist als Verbindungsschicht im Sinne der Erfindung zu verstehen. Dies legt dabei die Materialwahl des Ventilkörpers nicht fest. Die Ventilkörperteile können sowohl aus Kunststoff (zum Beispiel thermoplastischen Kunststoff) wie auch aus entsprechenden Metallen gebildet sein. Dabei ist es möglich, dass die beiden Ventilkörperteile in Bewegungsrichtung des Ankers (nachfolgend auch als Achsrichtung beschrieben) zueinander justierbar beziehungsweise positionierbar sind und, sobald die Funktion des Ventiles geprüft ist, die beiden Ventilkörperteile zueinander durch die Verbindungsschicht lagestabil und auch dicht festgelegt werden. Die Anordnung erlaubt es daher große Maßtoleranzen zu kompensieren, was die Fertigung verbilligt!

Des weiteren wird in dem vorgeschlagenen Herstellungsverfahren eine Positionsjustage des in der Jochscheibe in einem Presssitz gehaltenen Kernes relativ zur Ankerlage, insbesondere nachdem die Positionsjustage der beiden Ventilkörperteile zueinander abgeschlossen ist, durchgeführt. Dabei ist zunächst die Jochscheibe mit dem tubusartigen Hülsenrand verbunden, zum Beispiel verschweißt oder verklebt worden. Die Ausgestaltung des Kernes mit einem Presssitz der Jochscheibe erlaubt es, dass der Kern, an dessen vorderen, dem Anker zugewandten Ende, sich nach einem Luftspalt der Anker anschließt, in seiner axialen Lage noch veränderbar ist. So ist es möglich, dass die elektromagnetischen Eigenschaften, insbesondere seine Regelkennlinie, noch einstellbar sind, nachdem die Ventileigenschaften festgelegt sind. Grundsätzlich ist es dabei möglich, dass der Kern sowohl axial in Richtung zur Halterung hin, wie auch zurück hierzu bewegbar ist.

In diesem Zusammenhang wird insbesondere darauf hingewiesen, dass alle im Bezug auf den Elektromagneten betätigbaren Ventil beschriebenen Merkmale und Eigenschaften aber auch Verfahrensweisen sinngemäß auch bezüglich der Formulierung des erfindungsgemäßen Herstellungsverfahrens übertragbar und im Sinne der Erfindung einsetzbar und als mit-offenbart gelten

Gleiches gilt auch in umgekehrter Richtung, das bedeutet, nur im Bezug auf das Herstellungsverfahren genannte, bauliche also vorrichtungsgemäße Merkmale können auch im Rahmen der Vorrichtungsansprüche berücksichtigt und beansprucht werden und zählen ebenfalls zur Erfindung und zur Offenbarung.

In der Zeichnung ist die Erfindung insbesondere in einem Ausführungsbeispiel schematisch dargestellt. Es zeigen:

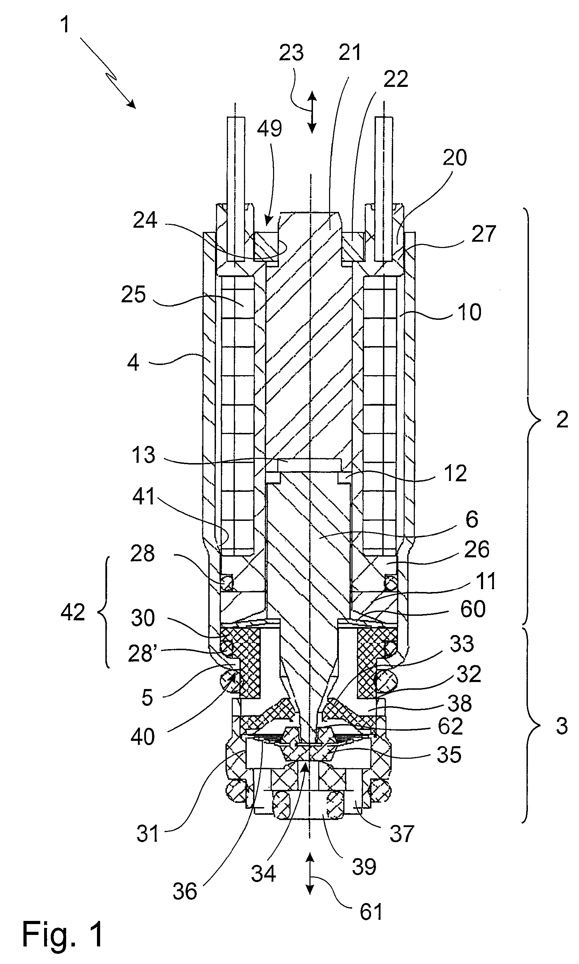

Fig. 1 in einem Schnitt ein erfindungsgemäßes Ventil;
Fig. 1 zeigt ein Ausführungsbeispiel des erfindungsgemäßen elektromagnetisch betätigbaren Ventiles 1. Es besitzt die beiden Bauteilehauptgruppen Elektromagnet 2 und Ventilkörper 3. In der in Fig. 1 gezeigten Ansicht ist die bevorzugte Montageposition gezeigt in welchem die Hülse 4 aufrecht, senkrecht orientiert ist und der Ventilkörper 3 unterhalb des Elektromagneten 2 angeordnet ist.

Die in Fig. 1 gezeigt Hülse 4 ist als tiefgezogenes Bauteil ausgebildet. An ihrem unteren Ende 40 befindet sich eine Halterung 5. Die Halterung 5 ist zum Beispiel als Haltekragen, Haltebügel oder Haltering ausgebildet, es können auch eine oder mehrere Haltestücke vorgesehen sein. Die Halterung 5 ist als Abbiegung ausgebildet und in das offene Ende 40 hineingebogen ausgeführt.

Die Ausbildung der Hülse 4 als tiefgezogenes Bauteil ist von erheblichem Vorteil, da dadurch die Herstellungskosten für die Hülse erheblich gesenkt werden.

Die Hülse 4 ist dabei nicht als reiner Zylinder ausgebildet, sondern sie besitzt im unteren Bereich eine Verjüngung 41, die zu einer Reduzierung des Innendurchmessers beziehungsweise Innenfläche der Hülse 4 führt. Diese untere, mit reduziertem Querschnitt ausgestaltete Bereich der Hülse 4 ist mit dem Bezugszeichen 42 gekennzeichnet. Es erstreckt sich über eine Länge von ca 15% bis 40% der Gesamthöhe der Hülse, bevorzugt circa 25% bis 30% und endet bevorzugt an dem unteren Ende 40 mit der Halterung 5.

Die Verjüngung 41 bewirkt, dass am oberen Hülsenende 49 ein größerer Innendurchmesser zur Verfügung steht wie am unteren Ende 40. Die Einbauteile, die in der Hülse nach unten eingeschoben werden und in der fertigen Einbauposition im Bereich der Verjüngung 41 zum Liegen kommen, besitzen somit einen deutlich kleineren Durchmesser wie der Innendurchmesser am oberen Hülsenende 49. Der daraus resultierende Einführspalt 10 erleichtert das Einführen der filigranen Bauteile erheblich. Es gilt sowohl bei einer händischen wie auch bei einer teilautomatisierten oder vollautomatisierten Montage. Für eine effektive Abdichtung des Medienstromes durch den Ventilkörper 3 sind in dem erfindungsgemäßen Magnetventil 1 mehrere Dichtungen 28, 28' vorgesehen. Sie befinden sich bevorzugt an den Bauteilen, die in den verjüngten Bereich 42 einstehen, wobei das obere Ventilkörperteil 30 eine erste Dichtung 28' trägt und der untere Flansch 26 des Spulenkörpers 20 trägt eine zweite Dichtung 28. Da auch der untere Bereich des Spulenkörpers, insbesondere der untere Spulenflansch 26 in den verjüngten Bereich 42 einsteht, wird so eine effektive Abdichtung erreicht. Oberhalb der Verjüngung 41 springt die Wand der Hülse zurück, das heißt, der Durchmesser weitet sich auf, was beim Einbau der Dichtungen 28, 28' von Vorteil ist, da die Dichtungen über den verhältnismäßig langen Hülsenweg nicht oder kaum an der Hülseninnenwand anliegen und Schaden nehmen können. Erst in dem Bereich kurz bevor die Dichtungen tatsächlich ihre Endlage erreichen, werden diese mechanisch (schleifend) beansprucht. Die geschickte Ausgestaltung der Hülse führt nicht nur zu einer kostengünstigen Ausgestaltung, sondern auch zu einer hohen Zuverlässigkeit und Verfügbarkeit der erfindungsgemäßen Ventile.

In der Hülse 4 befinden sich von unten nach oben folgende Bauteile. Am unteren, der Halterung 5 zugewandten Ende 40 der Hülse 4 befindet sich das obere Ventilkörperteil 30 des mehrteilig ausgebildeten Ventilkörpers 3.

Auf diesem aufliegend befindet sich die Ankerfeder oder Rückstellfeder 60, die mit dem Anker 6 fest verbunden ist. Diese ist als Flachformfeder beziehungsweise Blattfeder ausgebildet.

Die Rückstellfeder 60 wird dabei von der Befestigungsscheibe 11 auf den oberen Rand des oberen Ventilkörperteils 30 gedrückt und so fixiert. Dadurch erfährt die Rückstellfeder 60 und der damit verbundene Anker 6 eine Fixierung beziehungsweise Lagerung.

Weiter nach oben, also von der Halterung 5 entfernt schließt sich dann an der Befestigungsscheibe 11 der Spulenkörper 20 an, der die Wicklungen 25 von mit Strom beaufschlagbarem Draht trägt. Der untere Flansch 26 des Spulenkörpers 20 steckt dabei in der Verjüngung 41, der obere Flansch 27 hat ein etwas größeren Durchmesser wie der untere Flansch 26 und liegt an der Hülseninnenwand des oberen Hülsenendes 49 an. Gerade dieser etwas reduzierte Durchmesser des unteren Flansches 26 führt, zusammen mit der etwas reduzierten Durchmesser im Bereich der Wicklungen 25 zu den Einführspalt 10 der das Einmontieren des Spulenkörpers 20 in die Hülse 4 erleichtert. Die Anordnung ist dabei so gewählt, dass der Spulenkörper 20 soweit in die Hülse 4 einsteht, dass der untere Flansch 26 über die Verjüngung 41 hinaus in den Hülsenbereich 42 mit dem reduzierten Innendurchmesser hineinragt und so eine entsprechende Passung und Sitz für den unteren Flansch 26 ergibt.

Der in Fig. 1 gezeigte Anker 6 steht zu einen gewissen Teil in das Innere des Spulenkörpers 20, den sogenannten Ankerraum 12 ein. Das Spuleninnere des Spulenkörpers 20 ist dabei nicht vollständig von dem Kern 21, sondern nur teilweise von diesem ausgefüllt. Nach oben, von der Halterung 5 abgewandt schließt sich daher an den Anker 6 im nicht strombeaufschlagten Zustand, durch einen Luftspalt 13 getrennt, der Kern 21 an.

Der Kern 21 ist in einem Presssitz 24 in der Jochscheibe 22 gehalten. Die Jochscheibe 22 schließt die Hülse 4 an den in der Halterung 5 abgewandten Hülsenende 49 dicht ab, bevorzugterweise ist die Jochscheibe 22 mit der Hülse 4 verschweißt, verbördelt, verstemmt oder verklebt.

Die Jochscheibe 22 besitzt entsprechende Ausbrüche für die Durchführung der Zuführungsleitungen der Wicklung 25.

Der Ventilkörper 3, der sich innerhalb und außerhalb der Hülse 4, an der Halterung 5 im unteren Bereich des Magnetventiles 1 befindet, besteht aus mehreren Elementen. In die Hülse 4 eingesetzt ist das obere Ventilkörperteil 30 vorgesehen. Auf diese wird von Außen das untere Ventilkörperteil 31 aufgesteckt. Es ist dabei ein Vorteil, dass der Ventilkörper 3 mehrteilig ausgebildet ist, und der untere Ventilkörperteil 31 von Außen, unabhängig von dem oberen Ventilkörperteil 30, an die Hülse 4 heranführbar ist. Durch das Aufstecken wird eine noch lösbare, insbesondere axiale (bezogen auf die Bewegungsrichtung 61 des Ankers 6) Positionsjustage der Ventilkörperteile 30, 31 zueinander ermöglicht.

Der Ventilkörper 3, insbesondere das untere Ventilkörperteil 31 besitzt mittig einen Zulauf 39 der in die Düse 34 mündet, der durch einen Dichtkörper 35 verschlossen oder geöffnet wird. Hierzu ist der Dichtkörper 35 auf das spitz oder konisch zusammenlaufende Ende 62 des Ankers 6 aufgesetzt, eingeclipst oder angeklebt. Das Zusammenwirken des vorderen Endes 62 des Ankers.

6 mit dem Dichtkörper 35 ist dabei derart, dass zum einen eine starre Kopplung von Dichtkörper 35 und Anker 6 realisierbar ist, das heißt, der Dichtkörper 35 sofort der Bewegung des Ankers 6 folgt. Die Anordnung kann aber auch so realisiert werden, dass der Dichtkörper nur in eine Richtung des Ankers der Anhebbewegung folgt und bei der Rückzugsbewegung des Ankers 6 der Anker 6 zumindest teilweise aus der Tasche des Dichtkörpers 35 herausgezogen wird. In diesem Fall erfolgt die eigentliche Bewegung des Dichtkörpers 35 zum Beispiel durch den auf den Dichtkörper 35 anstehenden Mediendruck und/oder ein separates Federelement 36, das vorzugsweise entgegen der Vorspannungsrichtung der Ankerfeder 60 vorgespannt ist. Der Dichtkörper 35 besteht dabei bevorzugt aus elastischen, abdichtendem Material. Vorzugsweise besitzt der Dichtkörper 35 eine Ausnehmung oder Tasche, um das Aufstecken des Ankerendes zu erleichtern. Der Dichtkörper 35 ist mit einem Federelement 36 ausgestattet, es handelt sich hierbei um ein ähnliches Federelement wie es auch am Anker 6 durch die Rückstellfeder 60 realisiert ist. Es handelt sich hier ebenfalls um eine Flachform- oder Plattfeder, bevorzugt in Mäanderbauweise. Der Dichtkörper 35 ist dabei auf das Federelement 36 aufvulkanisiert, aufgeklebt, aufgespritzt oder in sonstiger geeigneter Weise verbunden.

Durch die Bewegung des Ankers 6 wird der Dichtkörper 35 relativ zur Düse 34 angestellt, das heißt, angehoben oder aufgesetzt. Dabei erfolgt die Anhebbewegung, also die Öffnungsbewegung des Ventils, durch eine Strombeaufschlagung der Wicklung 25. Das daraus resultierende Magnetfeld wirkt auf den aus magnetisierbaren Material bestehenden Anker 6 der unter Überwindung des Luftspaltes 13, gegebenenfalls gegen die Rückstellkraft der Ankerfeder 60 und des Federelementes 36, nach oben gezogen wird und in gleicher Weise den Dichtkörper 35 von dem Ventilsitz der Düse 34 abhebt. An der Düse 34 anstehendes Medium kann dann durch das Ventil in Richtung des Ausganges 37 strömen, an welchem ein Verbraucher angeschlossen ist.

Bei geschickter Ausbildung des Spulenkörpers 20 ist es auch möglich, die Befestigungsscheibe 11 einzusparen. Es ist klar, dass sich bei der Strombeaufschlagung der Anker 6 nach oben bewegt und somit auch die Ankerfeder 60 nach oben verbogen wird, weswegen es günstig ist, dass die Befestigungsscheibe 11 einen nach unten gerichteten Innenkonus aufweist, um so die Auslenkbewegung der Rückstellfeder/Ankerfeder 60 nicht zu behindern.

Das Innere des Ventilkörpers 3 besitzt des Weiteren noch einen Rücklauf 38, durch welchen das Medium bei verschlossenem Ventil in den Vorratstank zurück laufen kann.

Der Anker 6 ist von seinem unteren, in den Ventilkörper 3 einstehenden Ende 62 kegelig oder konusartig ausgebildet, er durchragt dabei das obere Ventilkörperteil 30 und noch eine daran vorgesehene Brücke 33, die eine diese bildende Öffnung hierfür aufweist. Unterhalb dieser Führungsbrücke 33 steht dann noch ein zylindrischer Stift des Ankers 6 vor, der in die Tasche des Dichtkörpers 35 einsteht. In dem in Fig. 1 gezeigten 3-2-Wegeventil dichtet der Dichtkörper 35 je nach Stellung des Ankers 6 in zwei Richtungen ab. In der angezogenen Stellung des Ankers 6 (die Spule ist mit Strom beaufschlagt) ist der Anker 6 gegen die Kraft der Rückstellfeder 60 nach oben zurückgezogen, der Luftspalt 13 ist geschlossen. Der Mediendruck in der Zuleitung 39 und die Vorspannung des Federelementes 36 bewirken, dass der Dichtkörper 35 von der Düse 34 abgehoben wird. Die Justierung der beiden Ventilkörperteile 30, 31 ist dabei so gewählt, dass in dieser Stellung des Ankers der Dichtkörper 35 auf die in der Brücke 33 angeordnete Düse aufliegt und diese verschließt. In diesem Schaltzustand des Elektromagneten besteht somit eine unmittelbare Verbindung zwischen dem Zulauf 39 und dem Verbraucheranschluss 37.

Im abgefallenen Zustand des Elektromagneten (wenn der Stromfluss durch die Spule abgeschaltet ist) ist die Ankerfeder 60 so stark ausgebildet, dass der Anker 6 vom Kern 21 abgehoben wird und der Anker 6 gegen die Kraft des Federelementes 36 und des auf dem Dichtkörper 35 anstehenden Mediendruckes nach unten bewegt wird, um zum einen die Düse in der Brücke 33 zu öffnen und gleichzeitig die Düse 34 am Zulauf 39 zu schließen. In dieser geschlossenen Stellung besteht eine Verbindung zwischen dem Rücklauf 38 und dem Verbraucheranschluss 37.

Die Anordnung ist dabei so gewählt, dass die Bohrung in der Brücke 33 eine ausreichende Weite aufweist, um eine Düse zur Verfügung zu stellen, die Führung des Ankers 6 erfolgt dabei zum Beispiel über die Rückstellfeder 60 und die Lagerung des Ankers 6 im Spulenkörper.

Der Aufbau beziehungsweise die Montage des erfindungsgemäßen Ventils erfolgt in einer Vielzahl von Schritten. Beim ersten Schritt wird der obere Ventilkörperteil 30 am oberen Hülsenende 49 in die Hülse 4 eingeführt. Die Hülse 4 ist dabei als tiefgezogenes Bauteil realisiert und senkrecht stehend aufgestellt, wobei der Hülsenbereich 42 mit der Verjüngung 41 im unteren Bereich ist. Das obere Ventilkörperteil 30 wird dabei durch die Hülse 4 durchgeschoben bis diese auf der Halterung 5 aufliegt.

Im nächsten Schritt wird der Anker 6 mit der daran angebauten zum Beispiel angeschweißten, bevorzugt mäanderförmigen Rückstellfeder 60 ebenfalls von oben, also durch das Hülseninnere 49 in die Hülse 4 eingeschoben, wobei der kegelig beziehungsweise konusartig zusammenlaufende Ankerende 62 nach unten ragt und, sobald die Rückstellfeder 60 auf den Schultern beziehungsweise Rand des oberen Ventilkörperteiles 30 aufliegt, das Ankerende 62 die Bohrung in der Brücke 33 des oberen Ventilkörperteiles 30 durchragt derart, dass das vordere Ende 62 in einen Dichtkörper 35 eintauchen kann.

Die Lage der Rückstellfeder beziehungsweise Ankerfeder 60 und damit auch des damit fest verbundenen Ankers 6 wird durch die Befestigungsscheibe 11 hergestellt, die als Ringscheibe ausgebildet, ebenfalls von oben durch das Hülsenende 49 eingeführt wird und auf den bereits eingebauten Anker 6 aufgeschoben wird.

Es wird dann der Spulenkörper 20 mit daran bereits angeordneten Dichtungen 28 eingebaut. Bei der hier gezeigten Variante ist das Spuleninnere zunächst hohl, es wird in dem nachfolgenden Schritt durch einen Kern 21 gefüllt, der in einem Presssitz 24 in einer Jochscheibe 22 gelagert ist. Es ist alternativ durchaus möglich, dass der Kern 21 im Spulenkörper 20 vormontiert ist.

Die aufgesetzte Jochscheibe 22 wird mit dem Tubus beziehungsweise Spulenkörper 20 oder Hülse 4 verbunden. Das Verbinden der Jochscheibe 22 mit dem Tubus, Spule, Spulenkörper 20 oder Hülse 4 erfolgt dabei zumindest mechanisch stabil, undicht oder alternativ dicht, hierfür können zusätzliche Dichtungen 28, 28', die in der Hülse eingelegt sind, vorgesehen sein. Die Verbindung der Jochscheibe 22 mit dem Tubus, Spule, Spulenkörper 20 und/oder Hülse 4 erfolgt dabei zum Beispiel durch ein Verschweißen, durch ein mechanisches Verstemmen oder Verbördeln, ein Verlöten oder ein Verkleben.

An dieser Stelle ist die Hülse 4 bereits verschlossen. An ihrem unterem Ende 40 ist der noch geöffnete Ventilkörper 3 vorhanden, die in einem nachfolgenden Schritt durch das Aufsetzen des unteren Ventilkörperteiles 31 komplettiert wird.

Wie bereits mehrfach ausgeführt, bestehen mehrere vorteilhafte Zeitpunkte, an welchem das untere Ventilkörperteil 31 von außen an die Hülse 4 herangeführt oder bereit gelegt wird und mit dem oberen Ventilkörperteil 30 zur Bildung des Ventilkörper 3 verbunden wird.

In das untere Ventilkörperteil 31 ist dabei bereits der Dichtkörper 35 eingelegt, der mit der daran integriert angeordneten Federelement 36 genau positioniert ist. Durch das Aufstecken des unteren Ventilkörperteils 31 auf den oberen Ventilkörperteil 30 wird auch gleichzeitig der Anker 6, genaugenomenen das vordere Ankerende 62 mit dem Dichtkörper 35 in Wirkverbindung gebracht.

In dieser Herstellungsstufe hat das erfindungsgemäße Ventil noch zwei Einstellmöglichkeiten, um einerseits entsprechende Toleranzen auszugleichen, und zum anderen die gewünschte Regelkennlinie einzustellen.

Die erste Einstellmöglichkeit befinden sich bei den beiden Ventilkörperteilen 30, 31 die zunächst nur aufgesteckt aber noch lösbar sind. Ihre axiale Relativposition zueinander wird durch einen Funktionstest eingestellt. Die mit Strom beaufschlagte Spule 20 führt zu einer Öffnung des Ventiles, also ein Abheben des Dichtkörpers 35 von der Düse 34. Zum Beispiel ist es möglich bei geöffnetem Ventil die Durchflussmenge bei vorgegebenen Förderdruck durch eine axiale Position des unteren Ventilkörperteiles 31 zum oberen Ventilkörperteil 30 einzustellen. Im geschlossenen, abgefallenen Zustand des Elektromagneten 2 / Ankers 6 ist durch die Justage sicher zu stellen, dass das Ventil sicher geschlossen ist, also das Dichtstück 35 auf der Düse 34 ruht. Ist diese gefunden wird diese durch eine Verbindungschicht 32 zwischen dem oberen Ventilkörperteil 30 und dem unteren Ventilkörperteil 31 fixiert. Dies kann zum Beispiel eine Klebeschicht oder eine Schweißschicht, oder ähnliches sein.

Zu diesem Zeitpunkt sind die fluidmechanischen Eigenschaften des Ventils eingstellt, es erfolgt danach noch eine Einstellung der elektromagnetischen Eigenschaften durch eine Positionsjustage des Kernes 21 in der Jochscheibe 22. Hierzu dient Presssitz 24 in welchem der Kern 21 in der Jochscheibe 22 gelagert ist. Dieser Presssitz erlaubt, dass der Kern 21 in Richtung des Doppelpfeiles 23, parallel zur Bewegungsrichtung 61 des Ankers 6, beweg- und positionierbar ist, bevorzugt wird, der Kern 21 in das Spuleninnere eingedrückt.

Diese Kernjustage erfolgt zum Beispiel durch ein Aufnehmen der Regelkennlinie, dadurch werden auch die elektromagnetischen Eigenschaften des Magnetventiles justiert.

Die jetzt mit der Anmeldung und später eingereichten Ansprüche sind ohne Präjudiz für die Erzielung weitergehenden Schutzes. Sollte sich hier bei näherer Prüfung, insbesondere auch deseinschlägigen Standes der Technik, ergeben, dass das eine oderandere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, dass die in den verschiedenen Ausführungsformen beschriebenen und in den Figuren gezeigten Ausgestaltungen und Varianten der Erfindung beliebig untereinander kombinierbar sind.

Die in den abhängigen Ansprüchen angeführten Rückbeziehungen weisen auf die weitere Ausbildung des Gegenstandes des Hauptanspruches durch die Merkmale des jeweiligen Unteranspruches hin.

Merkmale, die nur in der Beschreibung offenbart wurden oder auch Einzelmerkmale aus Ansprüchen, die eine Mehrzahl von Merk-malen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mitanderen Merkmalen besonders günstige Ergebnisse erreichen.

## Patentansprüche

1. Elektromagnetisch betätigbares Ventil, bestehend aus einem Elektromagneten und einem Ventilkörper und einer Hülse, welche zumindest den Elektromagneten aufnimmt, wobei die Hülse (4) als tiefgezogenes Bauteil ausgebildet ist, wobei die Hülse (4) an einem Ende (40) eine in die Öffnung der Hülse (4) hineinragende Halterung (5) aufweist und der Ventilkörper (3) aus einem in die Hülse (4) eingeführten, an der Halterung (5) anliegenden oberen Ventilkörperteil (30) und einem von Außen mit dem oberen Ventilkörperteil (30) verbindbaren, unteren Ventilkörperteil (31) gebildet ist, **dadurch gekennzeichnet, dass** das der Halterung (5) gegenüberliegende Hülsenende (49) durch eine den Kern (21) des Elektromagneten (2) haltende Jochscheibe (22) verschlossen ist und der Kern (21) in einem Presssitz (24) der Jochscheibe (22) gehalten ist und für Justagezwecke relativ zur Jochscheibe (22) in dem Presssitz (24) positionierbar ist.

2. Ventil nach Anspruch 1, **dadurch gekennzeichnet, dass** die Halterung (5) als mindestens ein Haltestück, Haltekragen, Haltebügel oder Haltering ausgebildet ist.

3. Ventil nach einem der vorhergehenden Ansprüche, **dadurch gekennzeichnet, dass** die Halterung (5) zur Positionierung des Ventilkörpers (3) an der Hülse (4) dient und der Ventilkörper (3) zumindest teilweise aus der Hülse (4) heraussteht.

4. Ventil nach einem der vorhergehenden Ansprüche, **dadurch gekennzeichnet, dass** der obere Ventilkörperteil (30) und der untere Ventilkörperteil (31) durch eine Verbindungsschicht (32) oder Verbindungsmittel lagestabil und dicht verbindbar ist.

5. Ventil nach einem der vorhergehenden Ansprüche, **dadurch gekennzeichnet, dass** die Verbindungsschicht als Klebeschicht oder Schweißschicht ausgebildet ist.

6. Ventil nach einem der vorhergehenden Ansprüche, **dadurch gekennzeichnet, dass** die Hülse (4) innenseitig eine Verjüngung (41) aufweist.

7. Ventil nach einem der vorhergehenden Ansprüche, **dadurch gekennzeichnet, dass** die Verjüngung (41) auf der der Halterung (5) zugewandten Hülsenseite (42) vorgesehen ist.

8. Ventil nach einem der vorhergehenden Ansprüche, **gekennzeichnet durch** einen Einführspalt (10) zwischen dem Außendurchmesser des Spulenkörpers (20) des Elektromagneten (2) und dem Innendurchmesser der Hülse (4).

9. Verfahren zur Herstellung eines durch einen Elektromagneten betätigbaren Ventiles, nach einem oder mehreren der vorhergehenden Ansprüche, **gekennzeichnet durch** die Abfolge folgender Schritte:
1. Einführen des oberen Ventilkörperteiles in das Ende einer tiefgezogene Hülse, die an ihrem anderen Ende eine in die Öffnung der Hülse hineinragende Halterung aufweist.
2. Einsetzen des Ankers in das obere Ventilkörperteil.
3. Einführen des Wicklungen eines stromführenden Drahtes tragenden Spulenkörpers in die Hülse.
4. Verschließen des der Halterung gegenüberliegenden Hülsenendes mit einer Jochscheibe.

10. Verfahren nach Anspruch 9, **dadurch gekennzeichnet, dass** bevor die beiden Ventilkörperteile miteinander verbunden werden, der die Düse des Ventiles je nach Ankerstellung freigebende oder verschließende Dichtkörper mit dem vorderen Ende des Ankers verbunden wird oder gleichzeitig mit der Verbindung der beiden Ventilkörperteile der die Düse des Ventils je nach Ankerstellung freigebende oder verschließende Dichtkörper mit dem vorderen Ende des Ankers verbunden wird.

11. Verfahren nach einem der Ansprüche 9 oder 10, **dadurch gekennzeichnet, dass** nachdem das obere Ventilkörperteil in die Hülse eingesetzt ist, bevorzugt nachdem das der Halterung gegenüberliegende Hülsenende mit der Jochscheibe verschlossen wurde, das obere Ventilkörperteil mit einem von außen an die Hülse herangeführten oder vorgehaltenen unteren Ventilkörperteil verbunden wird.

12. Verfahren nach einem der Ansprüche 9 bis 11, **dadurch gekennzeichnet, dass** nachdem eine Positionsjustage des unteren Ventilkörperteiles zum oberen Ventilkörperteiles erfolgt ist, die beiden Ventilkörperteile durch eine Verbindungsschicht zueinander lagestabil festgelegt werden.

13. Verfahren nach einem der Ansprüche 9 bis 12, **gekennzeichnet durch** eine Positionsjustage des in der Jochscheibe in einem Presssitz gehaltenen Kernes relativ zur Ankerlage, insbesondere nachdem die Positionsjustage der beiden Ventilkörperteile zueinander abgeschlossen ist.

## Claims

1. Electro-magnetically actuated valve, consisting of an electro magnet and a valve body and a sleeve holding at least the electro magnet, wherein the sleeve (4) is configured as deep drawn component, wherein the sleeve (4) has on one end (40) a holding device (5) projecting in the opening of the sleeve (4), and the valve body (3) is formed of a top valve body element (30) inserted in the sleeve (4) and in contact with the holding device (5), and a bottom valve body element (31) that can be connected from outside with the top valve body (30), **characterized in that** the sleeve end (49) opposite the holding device (5) is sealed by a disc-shaped yoke (22) holding the core (21) of the electro-magnet (2), and the core (21) is held in a press fit (24) of the disc-shaped yoke (22) and for adjustment can be positioned relatively to the disc-shaped yoke (22) in the press fit (24).

2. Valve according to claim 1, **characterized in that** the holding device (5) is designed as at least one retaining element, retaining collar, retaining bracket, or retaining ring.

3. Valve according to one of the preceding claims, **characterized in that** the holding device (5) serves for positioning the valve body (3) at the sleeve (4), and the valve body (3) projects at least partly from the sleeve (4).

4. Valve according to one of the preceding claims, **characterized in that** the top valve body element (30) and the bottom valve body element (31) are position-stable and can be connected snugly by a connecting layer (32) or connecting means.

5. Valve according to one of the preceding claims, **characterized in that** the connecting layer is configured as adhesive layer or welding layer.

6. Valve according to one of the preceding claims, **characterized in that** the sleeve (4) tapers (41) on its inside.

7. Valve according to one of the preceding claims, **characterized in that** the tapering (41) is provided on the side (42) of the sleeve facing the holding device (5).

8. Valve according to one of the preceding claims, **characterized by** an insertion gap (10) between the exterior diameter of the coil former (20) of the electro magnet (2) and the interior diameter of the sleeve (4).

9. Method for producing a valve actuated by an electro-magnet according to one or more of the preceding claims, **characterized by** the sequence of the following steps:
1. Inserting the top valve body element in the end of a deep-drawn sleeve having on its other end a holding device projecting in the opening of the sleeve.
2. Inserting the armature in the top valve body element.
3. Inserting the coil former carrying windings of an energized wire in the sleeve.
4. Sealing the sleeve end opposite the holding device by means of a disc-shaped yoke.

10. Method according to claim 9, **characterized in that**, before connecting the two valve body elements, the sealing body, that releases or closes the nozzle of the valve depending on the position of the armature, is connected with the front end of the armature, or, at the same time when connecting the two valve body elements, the sealing body, that releases or closes the nozzle of the valve depending on the position of the armature, is connected with the front end of the armature.

11. Method according to one of the claims 9 or 10, **characterized in that**, after the top valve body element has been inserted in the sleeve, preferably after the sleeve end opposite the holding device has been sealed by means of the disc-shaped yoke, the top valve body element is connected with a bottom valve body element approaching the sleeve from outside or being provided.

12. Method according to one of the claims 9 to 11, **characterized in that**, after adjusting the position of the bottom valve body element to the top valve body element, both valve body elements are defined position-stable with one another by a connecting layer.

13. Method according to one of the claims 9 to 12, **characterized by** a position adjusting of the core held in the disc-shaped yoke in a press fit relatively to the position of the armature, in particular after the end of the position adjusting of the two valve body elements with one another.

## Revendications

1. Soupape actionnée de manière électromagnétique, consistant en un électroaimant, en un corps de soupape et en une douille recevant au moins l'électroaimant, avec une douille (4) formant un élément de construction par emboutissage et ladite douille (4) comportant au niveau d'une de ses extrémités (40) une fixation (5) rentrant à l'intérieur de l'ouverture de la douille (4) et avec un corps de soupape (3) formé par une partie supérieure de corps de soupape (30) introduite dans la douille (4) et s'appuyant contre la fixation (5) et par une partie inférieure de corps de soupape (31), **caractérisé en ce que** l'extrémité de douille (49) opposée à la fixation (5) est fermée par un disque de culasse (22) maintenant le noyau (21) de l'électroaimant (2) et **en ce que** ce noyau (2) est maintenu dans un siège (24) à ajustement serré du disque de culasse (22) et pouvant être positionné au niveau de ce siège à ajustement serré (24) par rapport au disque de culasse (22) pour des fins de rajustement.

2. Soupape selon la revendication 1, **caractérisée en ce que** la fixation (5) est configurée au moins comme une pièce de fixation, une bride de fixation, un étrier de fixation ou un anneau de fixation.

3. Soupape selon une des revendications précédentes, **caractérisé en ce que** la fixation (5) permet de positionner le corps de soupape (3) au niveau de la douille (4) et **en ce que** le corps de soupape (3) saillit au moins partiellement de la douille (4).

4. Soupape selon une des revendications précédentes, **caractérisée en ce que** la partie supérieure de corps de soupape (30) et la partie inférieure de corps de soupape (31) peuvent être inter-connectées par un moyen ou une couche d'interconnexion (32) de façon étanche et stable au niveau de leurs positions relatives.

5. Soupape selon une des revendications précédentes, **caractérisée en ce que** la couche d'interconnexion est une couche de colle ou de soudure.

6. Soupape selon une des revendications précédentes, **caractérisée en ce que** la douille (4) possède sur sa face intérieure une partie de diamètre réduit (41).

7. Soupape selon une des revendications précédentes, **caractérisée en ce que** la partie de diamètre réduit (41) est située au niveau de l'extrémité de la douille (42) faisant face à la fixation (5).

8. Soupape selon une des revendications précédentes, **caractérisée par** l'existence d'une fente d'introduction (10) entre le diamètre extérieur du corps de bobine (20) de l'électroaimant (2) et du diamètre intérieur de la douille (4).

9. Procédé de fabrication d'une soupape actionnée par un électroaimant selon une ou plusieurs des revendications précédentes, **caractérisé par** la séquence des étapes suivantes:
1. Introduction de la partie supérieure de corps de soupape dans l'extrémité d'une douille fabriquée par emboutissage dont l'ouverture opposée comporte dans son intérieur une fixation.
2. Mise en place de l'armature dans la partie supérieure de corps de soupape.
3. Introduction du corps de bobine comportant des enroulements d'un fil électrique dans la douille.
4. Fermeture de l'extrémité opposée à celle comportant la fixation avec un disque de culasse

10. Procédé selon la revendication 9, **caractérisé en ce que**, avant de connecter les deux parties de corps de soupape entre elles, le corps d'étanchéité ouvrant ou fermant la buse de la soupape selon la position de l'armature sera connecté à l'extrémité avant de l'armature ou **en ce que** simultanément à la connexion entre les deux parties de corps de soupape, le corps d'étanchéité ouvrant ou fermant la buse de la soupape selon la position de l'armature sera connecté à l'extrémité avant de l'armature.

11. Procédé selon une des revendications 9 ou 10, **caractérisé en ce que** la partie supérieure de corps de soupape est connectée à la partie inférieure de corps de soupape approchée ou présentée à l'extérieur de la douille après avoir introduit la partie supérieure de corps de soupape dans la douille et de préférence après avoir fermé l'extrémité de la douille opposée à la fixation avec le disque de culasse.

12. Procédé selon une des revendications 9 à 11, **caractérisé en ce que** les deux parties de corps de soupape sont fixées dans leurs positions l'une par rapport à l'autre par une couche d'interconnexion après l'ajustement de la position de la partie inférieure de corps de soupape par rapport à la partie supérieure de corps de soupape.

13. Procédé selon une des revendications 9 à 12, **caractérisé par** un ajustement de la position du noyau maintenu dans un siège à ajustement serré au niveau du disque de culasse par rapport à la position de l'armature, en particulier après l'achèvement de l'ajustement de la position des deux parties de corps de soupape.
